# EUROPEAN PATENT APPLICATION

(11) **EP 1 450 511 A1**
(43) Date of publication of application: **25.08.2004**
(21) Application number: 03290387.4
(22) Date of filing: 18.02.2003
(51) Int. Cl.: H04L 12/24

(54) **Device and method for simulating network traffic treatments of a network using policy rules**

(71) Applicant: ALCATEL, 75008 Paris (FR)
(72) Inventor: Koops, Mark, 91310 Montlhery (FR)
(74) Representative: Chaffraix, Sylvain

(57) **Abstract**

A device (1) is dedicated to the simulation of traffic treatments of network elements (NE) of a network using policy rules. The policy rules are stored as data in a database (DB) and define at least traffic treatments that the network elements (NE) are able to provide. This device (1) comprises a processing means (7) arranged, when it receives first input data, designing at least an ingress and an egress network elements, and second input data, designing a service to be implemented by the designated ingress and egress network elements, to access to the database (DB) to extract each of the policy rules that are associated to these designated ingress and egress network elements, and to implement the extracted policy rules in order to simulate the traffic flow between the designated ingress and egress network elements in presence of the designated service.

## Description

The present invention relates to networks using policy rules, and more particularly to the simulation of traffic flows and treatments in networks using policy rules.

As it is known by one skilled in the art, in networks using policy rules, creating services with a policy-based manager means creating policies that will be enforced on policy enabled network elements such as, for example, routers. So, in this type of network, a policy enabled network element can take decisions for different type of data flows, for example based on information of levels 3 to 7 (network layer, transport layer, session layer, presentation layer and application layer) in the OSI (Open System Interconnection) layer model. Consequently, such a network element (for example a router) will not only forward the packets it receives according to its routing table, but it will also be able to structure the packet flows in a sophisticated way. In other words, the policy management is used to manage the network elements as if they were state machines.

The policy rules are generally established according to models. For example, in the case of an IP network, the Policy Core Information Model (PCIM) describes the logical entities that are related to the policy management of IP based services such as Virtual Private Networks (VPNs). The Provider Provisioned VPN information model, from the IETF, describes a topology model which can be used to describe the network and its network elements from a physical as well as a virtual point of view.

When the sets of policy rules defining the network services have been established in accordance with these models, they are provisioned by a policy manager to a policy server, then to the concerned network elements (if necessary through a policy enforcement point (PEP) proxy). Unfortunately, when these sets of policy rules are enforced by multiple network elements it may occur an inconsistency between the provisioned and new configurations, as well as a conflict (for instance) between the policies defined for several network elements implementing a service. To find the cause of an inconsistency and/or a conflict and solve it, it is not an easy task.

The object of this invention is to improve the situation.

For this purpose, it provides a data processing device for simulating network traffic treatments between network elements of a network using policy rules stored as data in a database and defining at least traffic treatments that the network elements are able to provide.

This device comprises a processing means arranged, when it receives first input data, designing at least an ingress and an egress network elements, and second input data, designing a service to be implemented by the designated ingress and egress network elements, to access to the database to extract each of the policy rules that are associated to these designated ingress and egress network elements, and to implement the extracted policy rules in order to simulate the traffic flow between the designated ingress and egress network elements in presence of the designated service.

In this way, it is possible to check whether a network can effectively support services defined by sets of policy rules that have been established in accordance with normalized models, before these sets be provisioned to and enforced by its network elements.

The data processing device according to the invention may include additional characteristics considered separately or combined and notably :
- a processing means arranged to implement the extracted policy rules in order to determine which of them are involved with the designated service and the way they interact all together in presence of this designated service,
- a processing means arranged, in case where a path between the designated ingress and egress network elements includes at least one intermediate network element, to extract from the database each of the policy rules associated to the intermediate network element, and then to implement these extracted policy rules, after having implemented the extracted policy rules associated to the ingress network element but before implementing the extracted policy rules associated to the egress network element,
- paths defined by auxiliary (or second) policy rules stored in the database,
- a processing means arranged to work in a step by step mode in order that the traffic flow be simulated policy rule after policy rule. In that case it is advantageous that the processing means be able to deliver a message (or report) after each simulation step,
- a processing means arranged to deliver a message indicating whether or not the designated service to be implemented between the designated ingress and egress network elements is properly defined by the extracted policy rules,
- a processing means defining what is named a "rule engine" by one skilled in the art. Such a rule engine is preferably chosen in a group comprising at least a Java Expert System Shell and an llog Jrules,
- a resolution means arranged to determine a solution adapted to solve a conflict detected by the processing means, preferably with metapolicy rules.

Such a data processing device may advantageously equip a network policy server.

The invention also relates to a method of processing data relating to a network comprising network elements arranged to provide it with traffic treatments associated to services. This method comprises the steps of :
- storing data representative of policy rules defining at least traffic treatments that the network elements are able to provide,
- upon receipt of first input data, designing at least an ingress and an egress network elements, and second input data, designing a service to be implemented by the designated ingress and egress network elements, accessing to the stored data to extract each of the policy rules associated to the designated ingress and egress network elements, and
- implementing the extracted policy rules in order to simulate the traffic flow between the designated ingress and egress network elements in presence of the designated service.

The method according to the invention may include additional characteristics considered separately or combined and notably :
- when accessing to the data one implements the extracted policy rules in order to determine which of them are involved with the designated service and the way they interact all together in presence of this designated service,
- in case where a path between the designated ingress and egress network elements includes at least one intermediate network element, one extracts each of the policy rules associated to the intermediate network element, and then one implements these extracted policy rules after having implemented the extracted policy rules associated to the ingress network element but before implementing the extracted policy rules associated to the egress network element,
- a step by step simulation to simulate the traffic flow policy rule after policy rule. In that case a message (or report) is advantageously delivered after each simulation step,
- one delivers a message indicating whether or not the designated service to be implemented between the designated ingress and egress network elements is properly defined by the extracted policy rules,
- one determines a solution adapted to solve a detected conflict, preferably with metapolicy rules.

The invention may be advantageously implemented in telecommunication networks, and more especially in for instance IP networks, ATM networks, and FR networks.

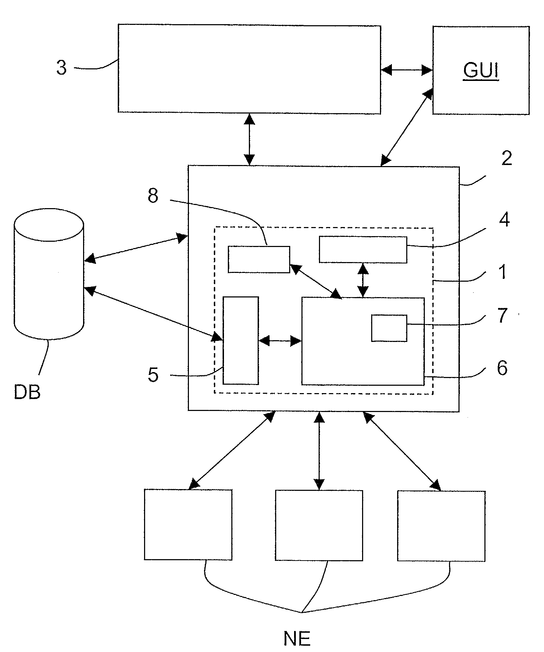

Other features and advantages of the invention will become apparent on examining the detailed specifications hereafter and the appended drawing, wherein the unique figure is a diagram block that schematically illustrates a policy manager linked to a policy server comprising a data processing device according to the invention. The appended drawing may not only serve to complete the invention, but also to contribute to its definition, if need be.

The invention relates to network using policy rules. As mentioned above, such a network comprises a network policy manager connected to a policy server dedicated to the provisioning of policy enforcement point, also named network elements (such as routers), with policy rules.

As illustrated in the unique figure (in a non-limiting embodiment) the invention provides a data processing device 1 that can be integrated in the network policy server 2 of a policy based management network, for instance.

In the following, it will be considered that the network elements NE, which are concerned by the policy rules, are routers or switches, or other network elements. Moreover, it will be considered hereafter that the network elements belong to a telecommunication network, for instance an IP network, or an ATM network, or else a FR network.

A network policy manager 3 is usually linked to a user interface, such as a Graphical User Interface (GUI), that allows the network operator (or supervisor) to establish set(s) of first policy rules defining the network services in accordance with models normalized by the IETF. By "first policy rules", it is meant traffic treatment rules that must be enforced by the network elements NE in order that the network services could be implemented.

For example, in an IP network a first policy rule orders a router to only allow HTTP traffic between 6 pm and 7 am, and/or all traffic up to 1 Mb/s between two specified IP addresses during working days. Also in an IP network a first policy rule may be of the following type : If <Source Address = X.X.X.X>, then <block traffic>. Or, if <more than N alarm originating from network element n°x have been received within M minutes, then <network element n°x is considered has out of order>.

These first policy rules can be seen as the technical description of the network services.

Sets of second (or auxiliary) policy rules are also established by the operator (or supervisor) through the GUI. These second policy rules, that are also named "reachability policy rules", define the different paths that have to be established inside the network between its different ingress network elements and its different egress network elements.

By "ingress network element", it is meant the first network element NE of the network that is supposed to receive a packet or a packet flow to transmit to an egress network element through the network. Moreover, by "egress network element", it is meant the last network element of the network that is supposed to receive a packet or a packet flow coming from an ingress network element through the network.

The network policy manager 3 may comprise a configuration modulus connected to the user interface GUI and arranged to transform the information provided by the operator (through this user interface GUI) in data defining the policy rules.

Each time a first or second policy rule has been established, it is transformed into data that are stored in a database DB connected to the policy server 2.

The data processing device 1 preferably intervenes before the first policy rules are send by the policy server 2 to the concerned network elements, through the network. This intervention aims at checking whether the network can effectively support services defined by a (new) set of policy rules.

It is important to notice that the network policy server 2 may be configured in order to systematically and automatically authorize the device 1 to intervene every time a new set of first policy rules has been established, or to authorize the device 1 to intervene only when it receives itself an authorization from the operator (or supervisor), through the policy manager 3.

The data processing device 1 comprises a first interface 4 that is linked to the database DB in which are stored the data defining the first and second policy rules. In the illustrated example, the data processing device 1 also comprises a second interface 5 that is linked to the GUI, through the policy server 2.

These first 4 and second 5 interfaces are linked to a processing modulus 6, which preferably comprises a memory 7 for storing data extracted from the database DB.

The processing modulus 6 is arranged, each time it receives (in this example from the second interface 5) first input data, designing at least an ingress and an egress network elements NE, and second input data, designing a service to be implemented by the designated ingress and egress network elements, to first access to the database DB, through the first interface 4 in order to extract each of the policy rules that are associated to the ingress and egress network elements that are designated by the first input data.

After having extracted these "first policy rules" the processing modulus 6 stores them in the memory 7. Then, it starts to implement the extracted policy rules in order to simulate the traffic flow between the designated ingress and egress network elements in presence of the designated service. By implementing a policy rule, it is meant loading this policy rule and running it as if it was enforced by the corresponding network element.

Preferably, the processing modulus 6 defines what is named a "rule engine" by one skilled in the art. Such a rule engine is preferably a Java Expert System Shell (JESS) or an llog Jrules.

A rule engine usually aims at providing trend analysis in fault management systems. For this purpose it is programmed with rules which usually depends one from the other, and possesses tracing and debugging capabilities that allow to present which rule(s) are triggered. So, a rule engine is adapted to work in a step by step mode that allows a rule after rule simulation.

In the present embodiment, the policy rules may be advantageously loaded in the rule engine 6, as rules, since the semantics of the rules and policy rules are similar.

The data processing device 1 is preferably a software modulus, but it may be also made of electronic circuit(s) or hardware modulus, or a combination of hardware and software modulus.

The data processing device 1 works as mentioned hereafter. When its second interface 5 receives, from the GUI, first and second input data designing an ingress and an egress network elements and a service to be implemented by these designated ingress and egress network elements, it transmits them to the rule engine 6. Then the rule engine 6 accesses to the database DB, through the first interface 4, to extract each of the policy rules that are associated to the ingress and egress network elements that are designated by the first input data. These "first policy rule data" are stored in the memory 7. Then, the rule engine 6 loads the whole first policy rules that correspond to the designated ingress network element.

Next, the rule engine 6 builds a framework associated to the ingress network element with the loaded first policy rules. This framework is made of an ordered chain of first policy rules, given that each first policy rule comprises at least one condition and at least two actions designating traffic treatments. For instance, a first action may be "if the condition n°n is false, then block the flow", while a second action may be "if the condition n°n is true, then allow the flow to go to network element n°y".

Then, the rule engine 6 works as if it was the ingress network element provided with the loaded first policy rules to enforce the service designated by the second input data. In fact the rule engine 6 simulates the traffic treatments that the ingress network element would applied to a packet (or a packet flow).

So, the rule engine 6 runs through the loaded first policy rules and every first policy rule that is triggered (or used) can be traced.

If the last first policy rule designates directly the egress network element, then the rule engine 6 loads the first policy rules that correspond to it, builds a framework and runs through this framework.

Other while, if the last first policy rule of the framework designates an intermediate network element, then the rule engine 6 accesses to the database DB, through the first interface 4, to extract each of the policy rules that are associated to this intermediate network element, and it stores them in the memory 7. Then it loads the newly extracted first policy rules, builds a framework and runs through this framework. The rule engine 6 repeats these process steps for every intermediate network element and for the designated egress network element.

In that way, the traffic flow may be simulated between the designated ingress and egress network elements.

As mentioned before, the paths between the ingress and egress network elements of the considered network are defined by the second policy rules (or reachability policy rules) that are stored in the database DB. So, when the rule engine 6 needs to extract the first policy rules that correspond to a designated intermediate network element it first reads the second policy rule(s) that define the path between the ingress and egress network elements, in order to check whether this designated intermediate network element belongs to this path and if it is at the right place.

Preferably, when the rule engine 6 has finished to simulate the traffic flow between the designated ingress and egress network elements, it delivers a detailed report (or message) indicating the result of the simulation, i.e. whether or not the traffic is able to support the designated service between the designated ingress and egress network elements. Such a message is preferably transmitted to the GUI through the second interface 5 in order that it could be displayed on a monitor of the network operator (or supervisor). So, if one inconsistency or problem or strange behaviour or conflict has been detected during the simulation, the network supervisor is informed about it and can act accordingly.

But, more preferably, the rule engine 6 delivers a detailed report (or message) at each step of the simulation process. In other words, it delivers a detailed report for each traffic treatment simulated on each concerned network element. Consequently, in case of conflicts or validation problems, the specific first policy rule, that causes the conflict or problem, can be easily detected.

The data processing device 1 can be used to find the origin of a network problem that occurred in a network element. But, it can also be used to find the origin of conflicts within resources (usergroups, time, network and application resources), within groups of resources, within policy conditions, within a single policy rule, between rules within a rule group, or between rules within a service, or else between rules defining different services.

By "between rules", it is meant between the resources and/or actions within the rule definitions of those rules. For instance, it can be decided that there is no policy conflict when one resource (group) within one rule does not overlap with one resource (group) in another rule. This could be the case when the policies are shared by different customers, for instance.

The data processing device 1 may also be arranged in order to propose automatically a solution in case where the behaviour of the network is different from the expected one. For this purpose, it can comprise a resolution modulus 8 using metapolicies that are preferably stored in the memory 7, but which could also be stored in the database DB.

For instance, the resolution modulus 8 may propose to change the priority of rules that are in conflicts, or to remove at least one policy rule, or else to merge policy rules.

If the proposal of the data processing device 1 is accepted by the network supervisor, the data processing device 1 preferably validate the configuration defined by the new set of first policy rules.

The invention may also be seen as a method of processing data relating to a network comprising network elements arranged to provide this network with traffic treatments associated to services.

This method (or process) can be implemented by means of the data processing device 1 above-described. The main and optional functionalities and sub-functionalities provided by the steps or procedures of this method being approximately identical with those provided by the means that constitute the device 1, only the steps that implement the main functionalities of the method according to the invention will be resumed hereafter.

This method comprises the steps of :
- storing data representative of policy rules defining at least traffic treatments that the network elements are able to provide,
- upon receipt of first input data, designing at least an ingress and an egress network elements, and second input data, designing a service to be implemented by the designated ingress and egress network elements, accessing to the stored data to extract each of the policy rules associated tothe designated ingress and egress network elements, and
- implementing the extracted policy rules in order to simulate the traffic flow between the designated ingress and egress network elements in presence of the designated service.

Thanks to the invention, it is provided a process for policy rule validation, simulation and conflict detection, and for solving conflict. Moreover, the conflict detection and resolution being an off-line process that does not required a reprovisioning and therefore a service interruption, it has no influence on the real-time network behavior.

The invention is not limited to the embodiments of policy server, data processing device and method described above, only as examples, but it encompasses all alternative embodiments which may be considered by one skilled in the art within the scope of the claims hereafter.

So, it has been described a data processing device fully integrated inside a policy server. But, the data processing device may be a dedicated modulus linked to a policy rule database and working independently from a policy server.

## Claims

1. Data processing device (1) for a network comprising network elements (NE), arranged to provide said network with traffic treatments associated to services, and a database (DB) for storing data representative of policy rules defining at least traffic treatments that each of said network elements are able to provide, wherein it comprises a processing means (6) arranged, upon receipt of first input data, designing at least an ingress and an egress network elements, and second input data, designing a service to be implemented by said designated ingress and egress network elements, to access to said database (DB) to extract each of said policy rules associated to said designated ingress and egress network elements, and to implement said extracted policy rules in order to simulate the traffic flow between said designated ingress and egress network elements in presence of said designated service.

2. A data processing device according to claim 1, wherein said processing means (6) is arranged to implement said extracted policy rules in order to determine which of them are involved with said designated service and the way they interact together in presence of said designated service.

3. A data processing device according to one of claims 1 and 2, wherein, in case where a path between said designated ingress and egress network elements includes at least one intermediate network element, said processing means (6) is arranged, after implementing said extracted policy rules associated to said ingress network element, to extract from said database (DB) each of said policy rules associated to said intermediate network element, and then to implement said extracted policy rules, before implementing said extracted policy rules associated to said egress network element.

4. A data processing device according to claim 3, wherein each path is defined by auxiliary policy rules stored in said database (DB).

5. A data processing device according to one of claims 2 to 4, wherein said processing means (6) works in a step by step mode in order that said traffic flow be simulated policy rule after policy rule.

6. A data processing device according to one of claims 1 to 5, wherein said processing means (6) is arranged to deliver a message indicating whether or not said designated service to be implemented between said designated ingress and egress network elements is properly defined by said extracted policy rules.

7. A data processing device according to the combination of claims 5 and 6, wherein said processing means (6) is arranged to deliver a message after each simulation step.

8. A data processing device according to one of claims 1 to 7, wherein it comprises a resolution means (8) arranged to determine a solution adapted to solve a conflict detected by said processing means (6).

9. A data processing device according to claim 8, wherein said resolution means (8) determines the solution with metapolicy rules.

10. A data processing device according to one of claims 1 to 9, wherein said processing means (6) define a rule engine.

11. A data processing device according to claim 10, wherein said rule engine (6) is chosen in a group comprising at least a Java Expert System Shell and an llog Jrules.

12. A policy server (2) for a network comprising network elements arranged to provide said network with traffic treatments associated to services, wherein it comprises at least one data processing device (1) according to one of claims 1 to 11.

13. A method of processing data relating to a network comprising network elements (NE) arranged to provide said network with traffic treatments associated to services, **characterized in that** it comprises the steps of :
• storing data representative of policy rules defining at least traffic treatments that each of said network elements is able to provide,
• upon receipt of first input data, designing at least an ingress and an egress network elements, and second input data, designing a service to be implemented by said designated ingress and egress network elements, accessing to said stored data to extract each of said policy rules associated to said designated ingress and egress network elements, and
• implementing said extracted policy rules in order to simulate the traffic flow between said designated ingress and egress network elements in presence of said designated service.

14. Method according to claim 13, wherein when accessing to said data one implements said extracted policy rules in order to determine which of them are involved with said designated service and the way they interact together in presence of said designated service.

15. Method according to one of claims 13 and 14, wherein, in case where a path between said designated ingress and egress network elements includes at least one intermediate network element, after implementing said extracted policy rules associated to said ingress network element, one extracts each of said policy rules associated to said intermediate network element, and then one implements said extracted policy rules, before implementing said extracted policy rules associated to said egress network element.

16. Method according to claim 15, wherein each path is defined by auxiliary policy rules stored in said database.

17. Method according to one of claims 14 to 17, wherein said simulation is made step by step in order that said traffic flow be simulated policy rule after policy rule.

18. Method according to one of claims 13 to 17, wherein one delivers a message indicating whether or not said designated service to be implemented between said designated ingress and egress network elements is properly defined by said extracted policy rules.

19. Method according to the combination of claims 17 and 18, wherein said message is delivered after each simulation step.

20. Method according to one of claims 13 to 19, wherein one determines a solution adapted to solve a detected conflict.

21. Method according to claim 20, wherein one determines the solution with metapolicy rules.

22. Use of the data processing device (1), policy server (2) and processing method according to one of the preceding claims in telecommunication networks.

23. Use according to claim 22, wherein said telecommunication network is chosen in a group comprising at least an IP network, an ATM network, and a FR network.
